(19) Europäisches Patentamt / European Patent Office / Office européen des brevets

(11) **EP 4 246 182 B1**

(12) **EUROPEAN PATENT SPECIFICATION**

(45) Date of publication and mention
of the grant of the patent:
**04.03.2026   Bulletin 2026/10**

(21) Application number: **22161895.2**

(22) Date of filing: **14.03.2022**

(51) International Patent Classification (IPC):
**G01S 13/32** *(2006.01)*      **G01S 7/35** *(2006.01)*
**G01S 13/931** *(2020.01)*

(52) Cooperative Patent Classification (CPC):
**G01S 7/354; G01S 13/325; G01S 13/343;**
**G01S 13/347;** G01S 7/356; G01S 13/346;
G01S 2013/9325

(54) **MULTIBAND DIGITALLY MODULATED RADAR**

DIGITAL MODULIERTES MULTIBAND-RADAR

RADAR MULTIBANDE MODULÉ NUMÉRIQUEMENT

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**20.09.2023   Bulletin 2023/38**

(73) Proprietor: **GM Cruise Holdings LLC**
**San Francisco CA 94103 (US)**

(72) Inventors:
• **SANSON, Jessica Bartholdy**
**80686 Munich (DE)**
• **ARISTIZABAL, Gustavo Adolfo Guarín**
**81737 Munich (DE)**
• **GIERE, Andre**
**85667 Oberpframmern (DE)**
• **MUÑOZ, Jorge Julio Jácome**
**81737 Munich (DE)**

(74) Representative: **Manitz Finsterwald**
**Patent- und Rechtsanwaltspartnerschaft mbB**
**Martin-Greif-Straße 1**
**80336 München (DE)**

(56) References cited:
**EP-A1- 0 529 704     WO-A1-2019/215734**

**Description**

BACKGROUND

Range resolution of a radar sensor is a function of the bandwidth of a radar signal transmitted by the radar sensor. All else being equal, achieving a finer range resolution generally requires a wider bandwidth signal to be transmitted by the radar sensor. In some applications, such as automotive radar for collision detection and navigation, it may be desirable to achieve range resolution on the order of less than 10 centimeters. For some applications, achieving the desired range resolution requires a conventional radar sensor to transmit radar signals with a bandwidth greater than 1 gigahertz (GHz).

Whereas transmitting a radar signal with a large bandwidth (e.g., greater than 1 GHz) can allow a radar sensor to achieve a target range resolution, digitally sampling such a radar signal without aliasing requires analog-to-digital converters (ADCs) with sampling rates of several GHz. Furthermore, radar sensors that employ digital pulse modulation for preparing radar signals for transmission also require digital-to-analog converters (DACs) with sampling rates of several GHz. ADCs and DACs with sample rates of 1 GHz or greater generally require greater area on an integrated circuit and have higher power consumption than ADCs and DACs with lower sample rates. As a result, radar sensors that employ large bandwidth, digitally modulated radar signals have conventionally been bulky and had high power consumption.
WO 2019/215734 A1 discloses a system and method by which radar angle and range resolution are significantly improved without increasing complexity in critical hardware parts. A multi-pulse methodology is described in which each pulse contains partial angular and range information consisting of a portion of the total coherent processing interval (CPI) bandwidth, termed multiband chirp. Each chirp has significantly reduced fractional bandwidth relative to monoband processing. Each chirp contains angular information that fills only a portion of the 'virtual array', while the full virtual array information is contained across the CPI. This is done using only a single transmission antenna per pulse, thus significantly simplifying MIMO hardware realization, referred to as antenna-multiplexing (AM).
EP 529 704 A1 discloses a radar apparatus with a signal generator, transmitter means, antenna means, receiver means, a video processor and an indication device for the generation of a radar picture of the surroundings of the radar apparatus with a first resolution. A selected target, designated with control unit, may be displayed on the indication device with a second, higher resolution.

SUMMARY

The following is a brief summary of subject matter that is described in greater detail herein. The invention is defined by a radar system and a method according to the independent claims. Preferred embodiments are defined in the dependent claims.

Described herein are various technologies relating to radar sensors with improved range resolution. With more particularity, various technologies described herein facilitate generating radar-based range estimates to a target based upon a series of pulse sequences that collectively have a bandwidth greater than a bandwidth of the individual sequences. A radar sensor is configured to transmit a radar signal toward a target. The radar signal is a digitally modulated radar signal. In a non-limiting example, the digitally modulated radar signal is a phase-modulated continuous wave (PMCW) radar signal. The digitally modulated radar signal can comprise first pulses that are defined by a first frequency band and second pulses that are defined by a second frequency band. The first frequency band and the second frequency band are different and can at least partially overlap. As is described in greater detail below, the first frequency band and the second frequency band can be selected based upon a desired range resolution of range estimates generated by the radar sensor. The first frequency band and the second frequency band can further be selected based upon a maximum sampling frequency of DACs and ADCs employed in connection with preparing pulses that are transmitted by the radar sensor and sampling pulses that are received by the radar sensor, respectively. For instance, the first frequency band and the second frequency band can be selected to have bandwidths less than or equal to the maximum sampling frequency of the DACs and ADCs, so that the Nyquist-Shannon criterion remains satisfied.

The radar sensor receives a return from the target, the return comprising a reflection of the radar signal from the target. Thus, the return comprises the reflected first and second pulses. The radar sensor applies respective matched filters to the first pulses and the second pulses in the frequency domain. In various embodiments, the radar sensor computes a coarse range map that indicates a coarse range estimate to the target. The coarse range map can indicate a radar return response in each of a plurality of coarse range bins. The radar sensor computes the coarse range map based upon computing a digital correlation over the filtered first pulses and second pulses. The coarse range estimate can be a range corresponding to a coarse range bin in the coarse range map for which the radar return response is indicative of a target. A resolution of the coarse range estimate is based upon the bandwidths of the first frequency band and the second frequency band.

The radar sensor computes a fine range estimate to the target based upon the coarse range estimate. In an exemplary embodiment, the radar sensor selects a coarse range bin corresponding to the coarse range estimate from the coarse range map. The coarse range bin comprises a vector of values that are indicative of the radar return response in that coarse range bin over time. The radar sensor generates a fine-range-Doppler map based upon the vector. The fine-range-Doppler map comprises a plurality of fine-range-Doppler bins, wherein each fine-range-Doppler bin comprises a fine-range bin / Doppler bin pair. A value in a fine-range-Doppler bin is indicative of the radar return response corresponding to the fine-range-Doppler bin. In an exemplary embodiment, and as described in greater detail below, the radar sensor executes a modified discrete Fourier transform (DFT) over the vector to generate the fine-range-Doppler map. The radar sensor can identify a fine range estimate to the target based upon radar return response values in the fine-range-Doppler bins. The fine range estimate can have a resolution that is based upon a third frequency band that includes both the first frequency band and the second frequency band, such that the fine range estimate has a finer resolution than the coarse range estimate.

It is to be appreciated that while various aspects are described above with respect to first pulses and second pulses, a number of groups of pulses transmitted by the radar sensor in a single pulse repetition interval (PRI) can be other than two. In exemplary embodiments, a number of groups of pulses transmitted by the radar sensor in a single PRI can be selected based upon a desired joint bandwidth of the groups of pulses and a maximum sampling frequency of DACs and ADCs employed by the radar sensor for preparing and sampling radar signals. In a non-limiting illustrative example, if a desired joint bandwidth of the groups of pulses is 1 GHz and the maximum sampling frequency of DACs and ADCs employed by the radar sensor is 200 MHz, the radar sensor can be configured to transmit at least 5 groups of pulses in a single PRI, wherein the groups of pulses each have a bandwidth of 200 MHz, in order to satisfy the Nyquist-Shannon sampling criterion.

BRIEF DESCRIPTION OF THE DRAWINGS

Fig. 1 is a functional block diagram of an exemplary radar sensor.
Fig. 2 is a frequency-versus-time plot of an exemplary PRI.
Fig. 3 is another frequency-versus-time plot illustrating another exemplary PRI.
Fig. 4 is a functional block diagram of an exemplary hardware logic component configured for analysis of radar data.
Fig. 5 is a diagram illustrating an exemplary radar data flow.
Fig. 6 is a functional block diagram of an exemplary AV.
Fig. 7 is a flow diagram that illustrates an exemplary methodology for computing an estimated range to a target based upon a digitally modulated radar signal.
Fig. 8 is an exemplary computing system.

DETAILED DESCRIPTION

Various technologies pertaining to a radar sensor with improved range resolution are described herein. With more particularity, technologies described herein relate to a radar sensor that computes a coarse range estimate to a target based upon a radar signal, and subsequently computes a fine range estimate that has a resolution that is limited by a bandwidth that is greater than an instantaneous bandwidth of the radar signal at any given time. In the following description, for purposes of explanation, numerous specific details are set forth in order to provide a thorough understanding of one or more aspects. It may be evident, however, that such aspect(s) may be practiced without these specific details. In other instances, well-known structures and devices are shown in block diagram form in order to facilitate describing one or more aspects. Further, it is to be understood that functionality that is described as being carried out by certain system components may be performed by multiple components. Similarly, for instance, a component may be configured to perform functionality that is described as being carried out by multiple components.

Moreover, the term "or" is intended to mean an inclusive "or" rather than an exclusive "or." That is, unless specified otherwise, or clear from the context, the phrase "X employs A or B" is intended to mean any of the natural inclusive permutations. That is, the phrase "X employs A or B" is satisfied by any of the following instances: X employs A; X employs B; or X employs both A and B. In addition, the articles "a" and "an" as used in this application and the appended claims should generally be construed to mean "one or more" unless specified otherwise or clear from the context to be directed to a singular form.

Further, as used herein, the terms "component" and "system" are intended to encompass computer-readable data storage that is configured with computer-executable instructions that cause certain functionality to be performed when executed by a processor. The computer-executable instructions may include a routine, a function, or the like. It is also to be understood that a component or system may be localized on a single device or distributed across several devices. Further, as used herein, the term "exemplary" is intended to mean serving as an illustration or example of something and is not intended to indicate a preference.

As described herein, one aspect of the present technology is the gathering and use of data available from various sources to improve quality and experience. The present disclosure contemplates that in some instances, this gathered data may include personal information. The present disclosure contemplates that the entities involved with such personal information respect and value privacy policies and practices.

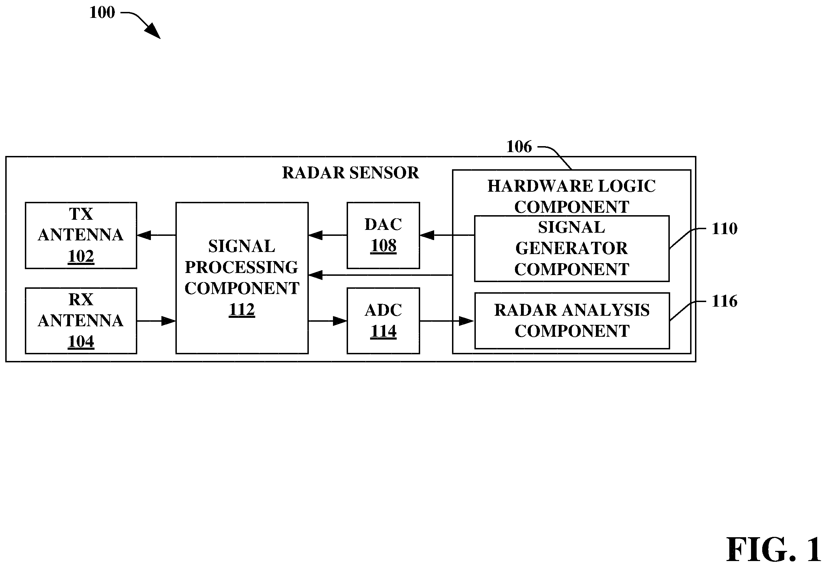

With reference now to Fig. 1, an exemplary radar sensor 100 is illustrated. The radar sensor 100 includes a transmit antenna 102, a receive antenna 104, and a hardware logic component 106. Briefly, the hardware logic component 106 is configured to prepare radar signals that are transmitted by the transmit antenna 102, and to compute target solutions indicating estimated positions and/or velocities of objects based upon radar returns received by the receive antenna 104. In exemplary embodiments, various components of the radar sensor 100 can be integrated as a same system-on-a-chip (SoC). In various embodiments, the radar sensor 100 can be employed on a vehicle, such as a land vehicle or an aircraft, to identify positions and velocities of objects in the operational environment of the vehicle.

The radar sensor 100 further comprises a DAC 108. The hardware logic component 106 comprises a signal generator component 110 that prepares radar signals for transmission by way of the transmit antenna 102. The signal generator component 110 is configured to control the DAC 108 to cause the DAC 108 to generate an analog radar signal for transmission by the transmit antenna 102. In other words, the signal generator component 110 generates digital values that, when received by the DAC 108, cause the DAC 108 to output an analog radar signal having various desired signal characteristics. Hence, the radar sensor 100 is configured as a digitally modulated radar sensor, wherein characteristics of radar signals output by the transmit antenna 102 are digitally controlled by the signal generator component 110 of the hardware logic component 106. For example, the signal generator component 110 can be configured to control the DAC 108 such that the radar sensor operates as a PMCW radar sensor.

The radar sensor 100 further includes an analog signal processing component 112. The signal processing component 112 is generally configured to perform various analog signal processing operations on analog signals that are to be output by the transmit antenna 102 and/or that are received by the receive antenna 104. By way of example, and not limitation, the signal processing component 112 can amplify a radar signal output by the DAC 108 to increase the power of the radar signal prior to transmission by way of the transmit antenna 102. In a further example, the signal processing component 112 can be configured to mix a radar signal output by the DAC 108 with a carrier signal to shift a center frequency of the radar signal. The signal processing component 112 can include any of various components that are configured to perform these various functions. For example, the signal processing component 112 can include mixers, amplifiers, filters, or the like. Functionality of the signal processing component 112 and its constituent components can be controlled by the hardware logic component 106. For example, and as will be described in greater detail below, the signal generator component 110 can control operation of the signal processing component 112 to cause the signal processing component 112 to shift center frequencies of radar pulse sequences output by the DAC 108. The transmit antenna 102 receives processed radar signals from the signal processing component 112 and emits the radar signals into an operational environment of the radar sensor 100.

The receive antenna 104 receives radar returns from the operational environment. In exemplary embodiments, the radar returns received by the receive antenna 104 comprise reflections, from objects in the operational environment of the sensor 100, of radar signals emitted by the transmit antenna 102. It is to be understood that the radar returns received by the receive antenna 104 can further include radar signals emitted by other radar emitters that are active within the operational environment of the radar sensor 100, or reflections thereof. As will be described in greater detail below, the technologies described herein can reduce the likelihood of interference among multiple radar sensors operating within the same operational environment. Responsive to receipt of radar returns from the operational environment of the sensor 100, the receive antenna 104 outputs an electrical signal that is indicative of the received radar returns. This electrical signal is referred to herein as a radar signal and is transmitted along one or more transmission lines in the radar sensor 100, as distinct from radar returns that are received by the receive antenna 104 as radiated signals propagating through air or free space in the operational environment of the radar sensor 100.

The signal processing component 112 receives a radar signal from the receive antenna 104. The signal processing component 112 is configured to perform various analog signal processing operations over radar signals received from the receive antenna 104. By way of example, and not limitation, the signal processing component 112 can perform various mixing, filtering, and amplification operations on radar signals output by the receive antenna 104. The signal processing component 112 can be configured to perform various of these signal processing operations (e.g., mixing) based further upon a radar signal transmitted by the transmit antenna 102.

The radar sensor 100 further comprises an ADC 114 that receives a processed radar signal from the signal processing component 112. The ADC 114 digitally samples the radar signal and outputs digital values that are indicative of amplitude of the radar signal over time. These digital values are collectively referred to herein as radar data. The radar data output by the ADC 114 are indicative of the radar returns received by the receive antenna 104.

The hardware logic component 106 receives the radar data from the ADC 114. The hardware logic component 106 further comprises a radar analysis component 116. The radar analysis component 116 is configured to compute positions and/or velocities of targets in the operational environment of the radar sensor 100 based upon the radar data. In a non-limiting example, the radar analysis component 116 can compute a range, a bearing, and/or a velocity of a target in the operational environment of the sensor 100 based upon the radar data.

Various exemplary operations of the radar sensor 100 are set forth below. As indicated above, the range resolution of a conventional radar sensor (i.e., a minimum difference in range between two objects that is unambiguously distinguishable by the radar sensor) is limited by the bandwidth of a radar signal emitted by the radar sensor. The range resolution, $S_r$, of a radar sensor is conventionally given by:

$$S_r = \frac{c}{2B} \qquad \qquad \text{Eq. 1}$$

where $S_r$ is the minimum difference in range between two objects that is unambiguously distinguishable by the radar sensor, c is the speed of light in the medium through which the radar signal emitted by the radar sensor is propagating, and B is the bandwidth of the radar signal. Hence, for a conventional radar sensor to achieve a range resolution of 7.5 centimeters, the conventional radar sensor emits a radar signal having a bandwidth of about 2 GHz.

A digitally modulated radar sensor, such as the radar sensor 100, generally employs DACs and ADCs that have a sampling frequency at least equal to the bandwidth of a complex-valued radar signal emitted by the sensor, in order to ensure that the Nyquist-Shannon sampling criterion is satisfied for complex-valued samples. Thus, a conventional digitally modulated radar sensor designed to achieve a 7.5-centimeter range resolution would employ DACs and ADCs with a sampling rate of at least 2 gigasamples per second (GS/s). However, the size-on-chip and power consumption of DACs and ADCs tends to increase as the sampling rate increases. High-speed DACs and ADCs are prohibitively large and power-consumptive to be used in a radar sensor employed for certain applications (e.g., automotive radar sensors).

The radar sensor 100 is configured to emit sequences of radar pulses that, over a PRI, collectively cover a bandwidth that is greater than a bandwidth of any of the individual pulses. In other words, the radar pulses emitted by the radar sensor 100 (by way of the transmit antenna 102) each have a smaller individual pulse bandwidth than a total repetition interval bandwidth that extends from a lowest frequency component in the radar pulses to a highest frequency component in the radar pulses. Hence, the DAC 108 of the radar sensor 100 can prepare a radar signal for transmission by way of the transmit antenna 102 while operating at an effective sampling rate below the total collective bandwidth of the pulses in a PRI.

The radar sensor 100 is further configured to compute an estimate of a range to a target based upon the pulses of a PRI collectively. The ADC 114 samples each of the pulses of a radar return at an effective sampling rate that is greater than or equal to the individual pulse bandwidth, but that is less than the total repetition interval bandwidth. The radar analysis component 116, based upon the sampled values of the radar return over a PRI, computes the estimate of the range to the target with a resolution that is limited by the bandwidth of the PRI rather than the individual pulse bandwidth. In other words, the range resolution $S_r$ of the range estimate output by the radar sensor 100 is given by the following Eq. 2:

$$S_r \geq \frac{c}{2B_{PRI}} \qquad \qquad \text{Eq. 2}$$

where $B_{PRI}$ is the collective bandwidth of the pulse sequences in the PRI, rather than Eq. 3:

$$S_r \geq \frac{c}{2B_{pulse}} \qquad \qquad \text{Eq. 3}$$

where $B_{pulse}$ is the bandwidth of the individual pulse sequences.

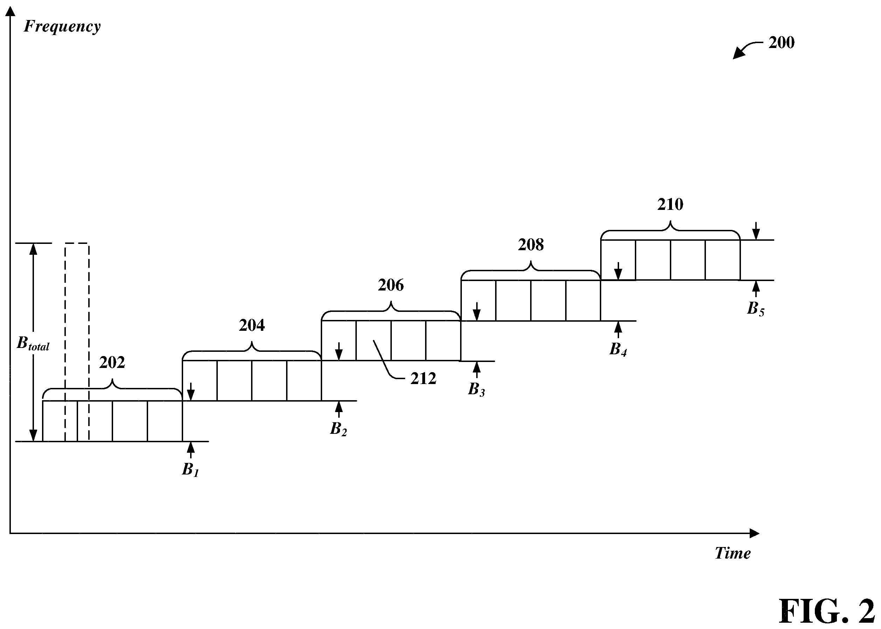

By way of further illustration, referring now to Fig. 2, an exemplary plot 200 of a radar PRI is shown, with signal frequency plotted against time. As used herein with respect to the radar sensor 100, pulses can refer to segments of a radar signal that is transmitted as a continuous wave signal, wherein the segments are individually representative of symbols encoded on the continuous wave signal. By way of example, in embodiments wherein the radar sensor 100 is configured as a PMCW radar sensor, a pulse can refer to a portion of the radar signal that represents a single digital value encoded on a phase of the carrier of the radar signal.

The plot 200 includes a plurality of pulse sequences 202-210. Each of the pulse sequences 202-210 includes a respective plurality of pulses (e.g., a pulse 212 in the third sequence 206). Collectively, the sequences 202-210 extend across a total bandwidth $B_{total}$ that is the sum of their respective individual bandwidths $B_1$, $B_2$, $B_3$, $B_4$, $B_5$. Each of the sequences 202-210 of pulses has a different center frequency. In exemplary embodiments, each of the sequences 202-210 can have a same individual pulse bandwidth. In other words, in various embodiments the bandwidths $B_1$, $B_2$, $B_3$,

$B_4$, $B_5$ are approximately equal. It is to be understood that while the pulse sequences 202-210 are shown as being transmitted in increasing order of center frequency, the pulse sequences 202-210 can be transmitted in substantially any order. In other embodiments, the radar sensor 100 can be configured to transmit the pulse sequences 202-210 in order of decreasing center frequency.

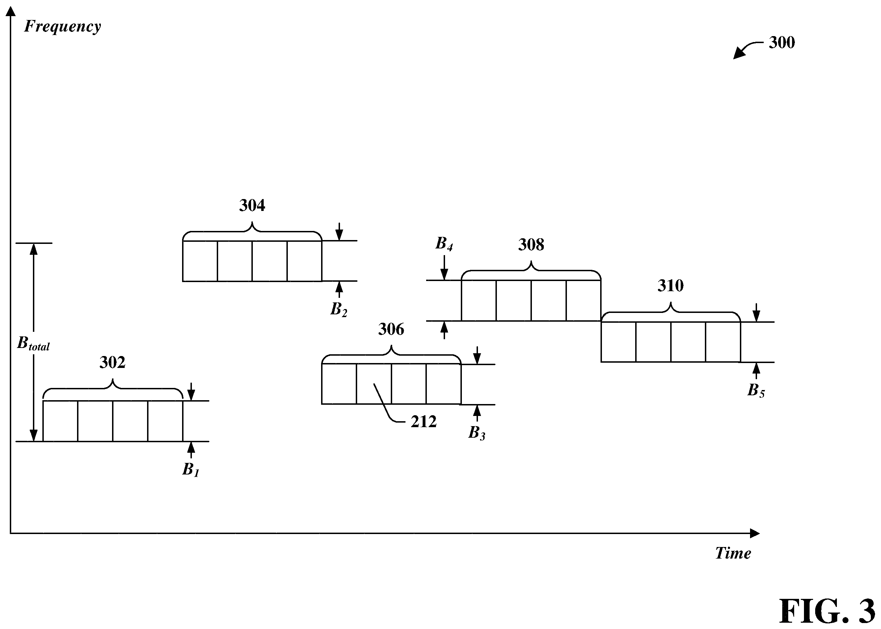

In other embodiments, the radar sensor 100 can be configured to transmit the pulse sequences 202-210 in a random order, or a pseudo-random order. For example, and referring now to Fig. 3, a plot 300 of frequency versus time is illustrated, showing a plurality of pulse sequences 302-310 that are transmitted in a random order of frequency. In the exemplary plot 300, the first pulse sequence 302 has a lowest center frequency. The second pulse sequence 304 has a highest center frequency. The third pulse sequence 306 has a center frequency that is greater than the center frequency of the first pulse sequence 302 but that is lower than the center frequencies of the other pulse sequences 304, 308, 310. The fourth pulse sequence 308 has a center frequency that is less than the center frequency of the second pulse 304 but greater than the center frequencies of the other pulse sequences 302-306, 310. The fifth pulse sequence 310 has a center frequency that is between the center frequencies of the third and fourth pulse sequences 306, 308. In a next PRI, an order of pulse sequences according to center frequency could be different than the order of the pulse sequences 302-310.

Referring again to Fig. 1, the signal generator component 110 prepares a radar signal that comprises a plurality of pulse sequences by controlling operation of the DAC 108 and the signal processing component 112. The signal generator component 110 can prepare the radar signal to have substantially any number of pulse sequences. In various embodiments, the signal generator component 110 can prepare the radar signal such that the sequences each have a predefined number of pulses. In a non-limiting example, each of the sequences comprises a Barker code. In these embodiments, the signal generator component 110 prepares the radar signal such that each of the sequences includes 2, 3, 4, 5, 7, 11, or 13 pulses. However, each of the pulse sequences can have substantially any number of pulses, and can employ substantially any code.

The signal generator component 110 prepares the radar signal such that each pulse sequence in a PRI covers a different portion of a total bandwidth of the PRI. For example, the signal generator component 110 prepares the radar signal such that each pulse sequence in a PRI has a different center frequency. In an exemplary embodiment, the signal generator component 110 outputs a digital representation of a first pulse sequence to the DAC 108. The first pulse sequence has a first bandwidth. The DAC 108 outputs a first analog signal that comprises the first pulse sequence to the signal processing component 112. The signal generator component 110 controls at least one of the DAC 108 or the signal processing component 112 to shift a center frequency of the first analog signal. For instance, the signal generator component 110 can control a frequency of a carrier signal that the signal processing component 112 mixes with the first analog signal to shift the first analog signal to a first center frequency. In other embodiments, the signal generator component 110 can control the DAC 108 to directly impart a desired center frequency to the first analog signal (i.e., such that the first analog signal has the first center frequency when output by the DAC 108).

Similarly, the signal generator component 110 can output a digital representation of a second pulse sequence to the DAC 108, wherein the second pulse sequence has a same first bandwidth as the first pulse sequence. Responsive to receipt of the second pulse sequence, the DAC 108 outputs a second analog signal that comprises the second pulse sequence to the signal processing component 112. The signal generator component 110 controls at least one of the DAC 108 or the signal processing component 112 to impart a center frequency of the second analog signal. Continuing the example above, the signal generator component 110 can control the frequency of the carrier signal that the signal processing component 112 mixes with the second analog signal to shift the second analog signal to a second center frequency that is different from the first center frequency. Hence, a radar signal output by the signal processing component 112 and transmitted by way of the transmit antenna 102 includes the first pulse sequence in a first frequency band and the second pulse sequence in a second frequency band, where the first frequency band the second frequency band are different.

In still further embodiments, the radar sensor 100 can include a plurality of transmit antennas that are each configured to transmit radar signals in a different frequency band. In these embodiments, the DAC 108 and the signal processing component 112 can be configured to selectively transmit radar signals by way of a different antenna in the plurality of transmit antennas based upon the center frequencies of the radar signals. By way of example, and not limitation, a radar sensor can include a first transmit antenna (e.g., the transmit antenna 102) and a second transmit antenna (not shown). The DAC 108 and the signal processing component 112 are configured to output a first pulse sequence in a first frequency band by way of the first transmit antenna, and to output a second pulse sequence in a second frequency band by way of the second transmit antenna. In these embodiments, the signal generator component 110 can be configured to control the DAC 108 and the signal processing component 112 such that radar signals are transmitted by way of the multiple transmit antennas sequentially. In other words, the signal generator component 110 can control the DAC 108 and the signal processing component 112 such that radar signals are transmitted in only one frequency band at a time.

In exemplary embodiments, the signal generator component 110 prepares the pulse sequences such that within a same pulse sequence, each of the pulses has a same bandwidth and a same center frequency. In various embodiments, each of the pulse sequences can have a same bandwidth centered about a different center frequency. In other embodiments, each of the pulse sequences can have a different bandwidth. The signal generator component 110 prepares the radar signal such that the bandwidths of the pulse sequences of a PRI are contiguous across the total bandwidth of the PRI. In other words, there are no bandwidth gaps between the bandwidths of the pulse sequences across the total bandwidth of the PRI. It is to be appreciated that in some embodiments, there may be some overlap between the bandwidths of the pulse sequences of the radar signal.

Bandwidths of the pulse sequences and/or a number of the pulse sequences can be selected based upon an effective sampling rate of the DAC 108 and/or ADC 114 and a desired range resolution of the radar sensor 100. In an exemplary embodiment, a total bandwidth of the PRI required for a given application can be determined according to Eq. 2 based upon the desired range resolution of the radar sensor 100. Bandwidths of the pulse sequences can be selected to be less than or equal to the effective sampling rates of the DAC 108 and the ADC 114 to ensure that the Nyquist-Shannon sampling criterion is satisfied for a complex-valued signal. A product of the bandwidth of the pulse sequences and a number of the pulse sequences can be selected to be approximately equal to the total bandwidth of the PRI. In a non-limiting example, the DAC 108 and the ADC 114 can have effective sampling rates of less than or equal to 500 MS/s, the bandwidths of the pulse sequences can be less than or equal to 500 MHz, and a desired range resolution can be less than or equal to 7.5 centimeters. In such example, the total bandwidth of a PRI can be greater than or equal to 2 GHz, and a number of the pulse sequences can be determined by dividing the PRI bandwidth by the selected bandwidth of the pulse sequences. For instance, each PRI can comprise 4 pulse sequences each having a bandwidth of 500 MHz, 5 pulse sequences each having a bandwidth of 400 MHz, 10 pulse sequences each having a bandwidth of 200 MHz, etc. In another example, the DAC 108 and the ADC 114 can have effective sampling rates of less than or equal to 250 MS/s, the bandwidths of the pulse sequences can be less than or equal to 250 MHz, and a desired range resolution of the radar sensor 100 can be less than or equal to 15 centimeters. In this example, the total bandwidth of a PRI can be greater than or equal to 1 GHz. Continuing the example, each PRI can comprise 4 pulse sequences each having a bandwidth of 250 MHz, 5 pulse sequences each having a bandwidth of 200 MHz, 10 pulse sequences each having a bandwidth of 100 MHz, etc.

In response to receipt of a digital radar signal from the signal generator component 110 prepared as described above, the DAC 108 outputs an analog radar signal that comprises a plurality of pulse sequences. As described above, the signal generator component 110 can control the DAC 108 such that each of the pulse sequences has a different center frequency and the pulse sequences collectively cover the total bandwidth of the PRI. In other embodiments, the signal generator component 110 can control the signal processing component 112 to shift the center frequencies of the pulse sequences output by the DAC 108 such that the pulse sequences collectively cover the total bandwidth of the PRI. The signal processing component 112 outputs the radar signal that comprises the frequency-shifted pulse sequences to the transmit antenna 102. The transmit antenna 102 emits the radar signal into the operational environment of the radar sensor 100 (e.g., toward a target present in the operational environment).

The receive antenna 104 receives a radar return from the operational environment, wherein the radar return comprises a reflection of the radar signal from a target in the operational environment of the sensor 100. Thus, the radar return comprises reflected pulse sequences. For the sake of simplicity, in the description that follows the radar return will be described as comprising the same pulse sequences present in the radar signal transmitted by the transmit antenna 102. However, it is to be understood that the pulse sequences present in the radar signal can be distorted by various environmental effects, interaction with objects in the operational environment of the sensor 100, interference, etc., and that the reflected pulse sequences present in the radar return may be based upon, but not identical to, pulse sequences present in the radar signal transmitted by the transmit antenna 102.

The signal processing component 112 receives a return radar signal from the receive antenna 104. The return radar signal is an electrical signal output by the receive antenna 104 responsive to receipt of the radar return from the operational environment of the radar sensor 100. The signal processing component 112 receives the return radar signal, which comprises the pulse sequences. The signal processing component 112 shifts the center frequency of the pulse sequences down to a baseband center frequency. It is to be understood that if a received pulse sequence has a same center frequency as the baseband center frequency, the signal processing component 112 need not shift the center frequency of that pulse sequence to the baseband center frequency. The ADC 114 receives the baseband-shifted pulse sequences and digitally samples the pulse sequences to generate radar data. The ADC 114 outputs the radar data to the radar analysis component 116.

Responsive to receipt of the radar data, the radar analysis component 116 computes a range estimate to a target in the operational environment of the sensor 100. In various embodiments, the radar analysis component 116 computes a range estimate to the target based upon a portion of the radar data that is representative of a single PRI. The radar analysis component 116 is configured to compute a coarse range estimate based upon the pulse sequences in the PRI. The coarse range estimate is indicative of a coarse range bin that spans a set of ranges in which the target is estimated to be present. In a non-limiting example, the coarse range bin can indicate that the target is estimated to be present at a range of between 20 and 25 meters. In various embodiments, the coarse range estimate can be a center range associated with a coarse range bin. For instance, if the coarse range estimate is indicative of the coarse range bin spanning 20-25 meters, the coarse range estimate can be an estimated range of 22.5 meters. However, a true range of the target may be any of the ranges associated with the coarse range bin (i.e., 20-25 meters).

Based upon the coarse range estimate, the radar analysis component 116 can compute a modified discrete Fourier transform (DFT) to generate a fine-range-Doppler map. The fine-range-Doppler map is indicative of a fine range estimate to the target. In exemplary embodiments, the fine range estimate can be or include an indication of a fine range bin that spans a set of ranges in which the target is estimated to be present. The resolution of the coarse range bin is based upon the bandwidth of the individual pulse sequences (e.g., the bandwidths $B_1$, $B_2$, $B_3$, etc.), whereas the resolution of the fine range bin is based upon the total bandwidth covered by the sequences over the PRI (e.g., the bandwidth $B_{total}$). Thus, the set of ranges spanned by the fine range bin is smaller than the set of ranges spanned by the coarse range bin. In other words, the resolution of the fine range estimate is finer than the resolution of the coarse range estimate. Continuing the example above, whereas the coarse range bin indicates that the target is estimated to be present at a range of between 20 and 25 meters, the fine range bin can indicate that the target is estimated to be present at a range of between 21 and 21.5 meters. It is to be understood that the fine-range-Doppler map can include a plurality of fine range bins that collectively cover the span of ranges covered by the coarse range bin.

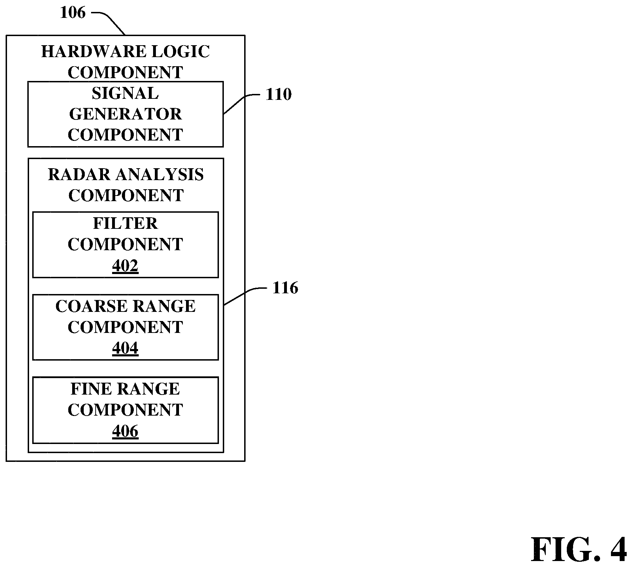

With reference now to Fig. 4, certain aspects of the hardware logic component 106 are illustrated in greater detail. In particular, the radar analysis component 116 includes a filter component 402, a coarse range component 404, and a fine range component 406. Briefly, the filter component 402 is configured to perform one or more filtering operations over the radar data received by the radar analysis component 116 in order to generate a map of frequency components of the radar return over time. The coarse range component 404 is configured to generate a coarse range estimate to a target in the operational environment of the radar sensor 100 based upon the map of the frequency components of the radar return generated by the filter component 402. The fine range component 406 is configured to generate a fine range estimate to the target based upon the coarse range estimate. The fine range component 406 can further be configured to output the fine range estimate and/or target detection data that is based upon or includes the fine range estimate to a perception system of a vehicle.

In exemplary embodiments, the filter component 402 applies a respective matched filter to each of the received pulse sequences in a PRI. Since each of the pulse sequences generated by the signal generator component 110 can be encoded by a different modulation signal, each of the pulse sequences in a PRI can be different. Hence, the filter component 402 can apply a different matched filter to each of the pulse sequences in the PRI. Applying the matched filters to the pulse sequences of the PRI allows the radar analysis component 116 to identify the pulse sequences in the radar data and to determine a phase difference between the pulse sequences as transmitted by the transmit antenna 102 and as received by the receive antenna 104. Furthermore, filtering operations can improve an SNR of the pulse sequences in the radar data. However, it is to be understood that in some embodiments, the filter component 402 does not apply a matched filter to pulse sequences in the radar data. For example, the filter component 402 can apply any or a combination of low-pass filters, high-pass filters, bandpass filters, or the like to the pulse sequences. In still other embodiments, filtering of the radar data pertaining to the pulse sequences of a PRI can be omitted.

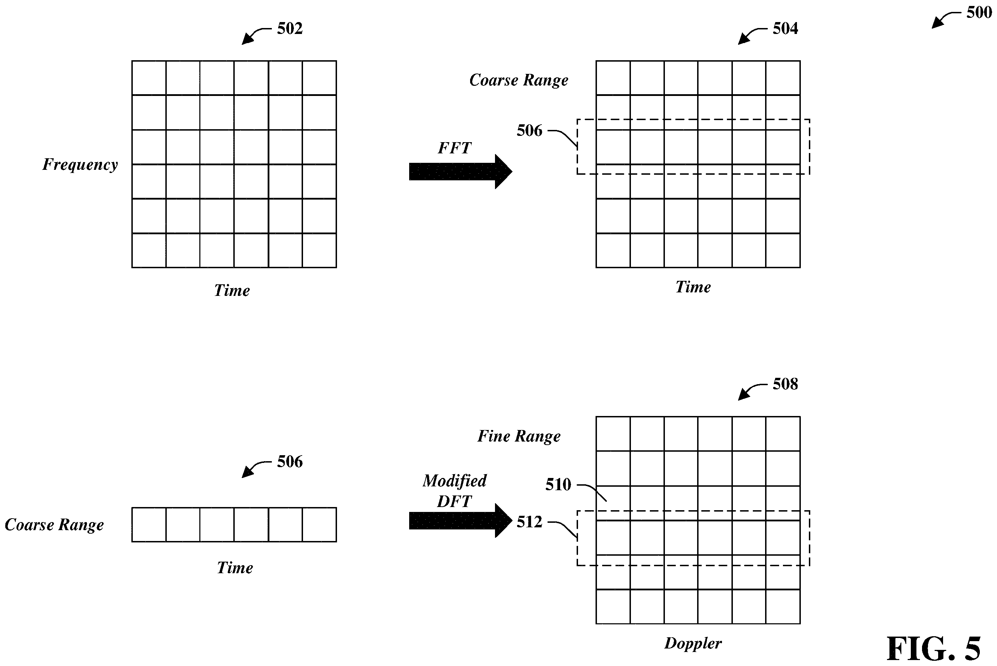

In these and other embodiments, the filter component 402 outputs a frequency map that is indicative of frequency components of the radar return indicated in the radar data over time. Referring now briefly to Fig. 5, a diagram of an exemplary data flow 500 based upon actions performed by the radar analysis component 116 is illustrated, wherein the data flow 500 is indicative of data generated by the filtering component 402, the coarse range component 404, and the fine range component 406 in connection with generating a fine range estimate to a target in the operational environment of the sensor 100. The data flow 500 includes a frequency map 502 generated by the filter component 402. The frequency map 502 comprises complex-valued data indicating magnitude and phase of different frequency components of the radar return over a period of time. In other words, the frequency map 502 is indicative of frequency components of the radar return represented by the radar data received by the radar analysis component 116 over a PRI.

Referring now to Figs. 4 and 5, the coarse range component 404 receives the frequency map 502 from the filter component 402 and computes a coarse range estimate to a target based upon the frequency map 502. In exemplary embodiments, the coarse range component 404 a digital correlation (such as an IFFT over the frequency map 502) to generate a coarse range map 504. The coarse range map 504 comprises a plurality of coarse range bins (e.g., coarse range bin 506), mapped against time. The coarse range component 404 can be configured to determine, based upon the values in each of the coarse range bins, a coarse range estimate to a target. By way of example, and not limitation, the coarse range component 404 can determine which coarse range bins have values that exceed a threshold. Coarse range bins with values exceeding the threshold can be determined to be indicative of targets in the operational environment of the sensor 100. Thus, for example, the coarse range component 404 can determine that a first coarse range bin has a value exceeding the threshold, and can output a set of ranges associated with the first coarse range bin as a coarse range estimate to a target. In various embodiments, the threshold can be a pre-defined value threshold. In other embodiments, the threshold can be a threshold that is based upon the values in the coarse range bins of the coarse range map 504. In non-limiting examples, the threshold can be a mean or median of the values in the coarse range bins, a standard deviation of the values in the coarse range bins, or the like.

A resolution of the coarse range bins is based upon the bandwidth of the individual pulse sequences that make up the PRI represented by the radar data. In some operational environments, the resolution of the coarse range bins may be insufficient to distinguish between targets of interest. For example, in embodiments wherein the radar sensor 100 is employed for object detection on a land vehicle, it may be desirable to distinguish between targets that are less than one meter apart for the purpose of collision avoidance. If the resolution, or minimum distinguishable distance, of the coarse range bins is greater than one meter, the coarse range component 404 may be unable to distinguish between multiple targets that are within one meter of one another.

The fine range component 406 is configured to generate a fine range estimate to a target based upon a coarse range estimate generated by the coarse range component 404, wherein the fine range estimate has a finer resolution than the coarse range estimate. In an exemplary embodiment, the fine range component 406 performs a modified DFT over values in a coarse range bin. By executing the modified DFT over the values in the coarse range bin, the fine range component 406 generates a fine-range-Doppler map corresponding to the coarse range bin. For instance, as shown in Fig. 5, the fine range component 406 can perform the modified DFT over the coarse range bin 506 to generate a fine-range-Doppler map 508. The fine-range-Doppler map 508 comprises fine-range-Doppler bins (e.g., fine-range-Doppler bin 510), and is indicative of ranges and velocities of targets that are present within the span of ranges represented by the coarse range bin. The ranges of the fine-range-Doppler map have a finer resolution than the coarse range bins. For instance, as shown in Fig. 5, the fine range component 406 can perform the modified DFT over the coarse range bin 506, wherein the coarse range bin 506 corresponds to all ranges between a first range and a second range. The fine-range-Doppler map 508 can also be representative of ranges between the first range and the second range. However, each fine range bin in the fine-range-Doppler map 508 (e.g., fine-range bin 512) is representative of some smaller portion of the set of ranges between the first range and the second range. For instance, if the coarse range bin 506 represents ranges between 20 and 21 meters, the fine-range bin 512 can be representative of ranges between about 20.33 meters and about 20.5 meters. Thus, a target range indicated in the fine-range-Doppler map 508 comprises a fine- range estimate that has a finer resolution than the coarse range estimate identified by the coarse range component 404.

Various details pertaining to the modified DFT executed by the fine range component 406 are now set forth. The fine range component 406 receives, from the coarse range component 404, a vector that comprises a set of values corresponding to a single coarse range bin from the coarse range map 504. Based upon the vector and the received pulse sequences, the fine range component 406 generates a fine-range-Doppler map, which fine-range-Doppler map is a matrix of values with fine range bins as rows, and Doppler bins as columns.

The radar signal transmitted by way of the transmit antenna 102 has a shift in the carrier frequency of $\Delta f(n)$ for an $n$th pulse sequence (where for a pulse sequence transmitted at baseband $\Delta f = 0$). The radar return for pulse sequence $n$, after being multiplied with the transmitted radar signal by way of a mixer (e.g., by the signal processing component 112), can be represented as:

$$y(n, t) = pulse\_code(n, t - t_d). * e^{-j2\pi(\Delta f(n).*t_d)} \qquad \text{Eq. 4}$$

$$n = 0, ..., N - 1; \; 0 \leq t < T; \; \text{and } t_d = 2(R_0 + nV_0.* t)/c$$

where $N$ is the total number of pulse sequences in a PRI, $T$ is the time of a single PRI, $pulse_{code(n,t)}$ is a symbol encoded on the radar signal in an $n$th pulse sequence in a PRI at time $t$, $t_d$ is the delay of the radar return relative to the transmitted radar signal, $R_0$ is the target range, $V_0$ is the target velocity, and $c$ is the speed of light in the medium of the operational environment of the radar sensor 100. As used herein, the letter $j$ follows the electrical engineering convention denoting $\sqrt{-1}$ .

The coarse and fine range of the target can be represented according to the following relationship:

$$\frac{R_0 + V_0.*t}{c} = R_{coarse} + (R_{fine} + V_0 T) \qquad \text{Eq. 5}$$

The fine range component 406 can perform a modified two-dimensional DFT for a given coarse range based upon the following pseudocode:

```
1)   for r_fine = 0: 1:N_fine_range-1
2)     for v = 0: 1: N-1
3)       for n = 0: 1: N-1
4)         an = exp(-j*2*pi*2*( n )* v *T*(f₀ + delta_f( n ))/c);
5)         bn = exp(j*2*pi*2*r_fine *delta_f( n )/c);
6)         cn = exp(j*2*pi*2*r_coarse*delta_f( n )/c);
7)           s( v, r ) = s ( v , r ) + y( p, n ).*an.*bn.*cn;
8)       end
9)     end
10)   end
11)  Y (r_coarse, : , :) = s;
```

The pseudocode above executes a nested series of *for* loops that iterate over a number of pulse sequences in a PRI, *N*, or a number of fine range bins, *N_fine_range,* in order to construct a fine-range-Doppler map for a given coarse range bin. In the pseudocode above, *r_coarse* refers to the coarse range value of the coarse range bin (e.g., a center value of the coarse range bin) over which the fine range component 406 executes the modified DFT; *r_fine* is a fine range estimation element; *r* is the sum of *r_coarse* and *r_fine* for *r_fine* = 0: 1:*N_fine_range*-1; *N_fine_range* is the number of fine ranges evaluated; *v* is a velocity estimation element; *delta_f(n)* is a frequency shift of the *n*th pulse sequence relative to an initial frequency $f_0$; *T* is the period of each pulse sequence; *y(p,n)* is the radar return response of an nth pulse sequence in coarse range bin *p*; and *s(v, r)* is a matrix that is the fine-range-Doppler map for the given coarse range vector *r_coarse.* The pseudocode constructs the matrix, *s(v, r),* by successively summing the element-wise product of the radar return response *y(p,n)* with factors *an, bn, cn,* which factors are updated in each loop. Factor *cn* servers as a coarse range migration factor that shifts values of *y(p, n)* according to the given coarse range. Factor *bn* is a fine range estimation element based upon the fine range bin defined by *r_fine.* Factor *an* is a Doppler estimation element based upon a Doppler bin defined by *v.*

In some embodiments, the fine range component 406 can be configured to evaluate a modified two-dimensional DFT over multiple coarse range vectors in a same matrix manipulation process. In an exemplary embodiment, the modified DFT can be represented as a series of matrix operations relative to matrices $A(n, v)$, $B(n, r_{fine})$, $C(n, r_{coarse})$. The matrices A, B, and C can be represented as follows:

$$A = \begin{bmatrix} n_1 v_1 & \cdots & n_1 v_N \\ \vdots & \ddots & \vdots \\ n_N v_1 & \cdots & n_N v_N \end{bmatrix} \qquad \text{Eq. 6}$$

$$B = \begin{bmatrix} n_1 r_{fine,1} & \cdots & n_1 r_{fine,N} \\ \vdots & \ddots & \vdots \\ n_N r_{fine,1} & \cdots & n_N r_{fine,N} \end{bmatrix} \qquad \text{Eq. 7}$$

$$C = \begin{bmatrix} n_1 r_{coarse,1} & \cdots & n_1 r_{coarse,N} \\ \vdots & \ddots & \vdots \\ n_N r_{coarse,1} & \cdots & n_N r_{coarse,N} \end{bmatrix} \qquad \text{Eq. 8}$$

Elements of matrices A, B, and C can be defined similarly to *an*, *bn,* and *cn,* respectively, in the pseudocode above. Thus:

$$A(n, v) = exp\left(-\frac{j2\pi 2nT(f0 + \Delta f(n))v}{c}\right) \qquad \text{Eq. 9}$$

$$B\left(n, r_{fine}\right) = exp\left(\frac{j2\pi 2\Delta f(n)r_{fine}}{c}\right) \qquad \text{Eq. 10}$$

$$C(n, r_{coarse}) = exp\left(\frac{j2\pi 2 r_{coarse}\Delta f(n)}{c}\right) \qquad \text{Eq. 11}$$

The fine range component 406 can compute the fine-range-Doppler response of the return as:

$$Y(p_n, :, :) = A^T * (B.* repmat(C(:, p_n).* y(:, p_n), 1, N)) \quad \text{Eq. 12}$$

where the function $repmat(C(:, p_n).*y(:,p_n), 1, N))$ replicates $N$ copies of the matrix defined by $C(:, p_n)^* y(:,p_n)$. In Eq. 12 and the pseudocode above, the colon operator indicates all elements in a given dimension. The matrix $Y(p,:,:)$ therefore forms a data cube of fine-range-Doppler maps each pertaining to a different coarse range bin in the coarse range map generated by the coarse range component 404. In embodiments wherein the radar sensor 100 transmits the pulse sequences in random order of center frequency, Eq. 12 can be modified to replace $A^T$ by a fast Fourier transform (FFT) over the matrix $(B.* repmat(C(:, p_n).*y(:, p_n), 1, N))$. In some embodiments, the fine range component 406 is configured to generate a fine-range-Doppler map for each of the coarse range bins of the coarse range map generated by the coarse range component 404. In other embodiments, the fine range component 406 can employ a predictor to identify coarse range bins that are expected to include a target. In these embodiments, the fine range component 406 can generate a fine-range Doppler map for those coarse range bins that are identified as being expected to include a target.

It is to be understood that the fine range component 406 computes fine range estimates (e.g., the fine-range-Doppler map 508) based upon multiple pulses in a radar return PRI (e.g., all pulses in a PRI). In the embodiments set forth herein, the range resolution of a fine range estimate computed by the fine range component 406 is based upon a total bandwidth spanned by the pulses of the PRI (e.g., $B_{total}$ in Figs. 2 and 3) rather than the bandwidth of a single pulse in the PRI. Therefore, the range resolution of a fine range estimate computed by the fine range component 406 is finer than the range resolution of the coarse range estimate computed by the coarse range component 404.

The fine range component 406, responsive to computing a fine-range-Doppler map, can output a fine range estimate to a target in the operational environment of the sensor 100 based upon the fine-range-Doppler map. For example, and referring once again to Fig. 5, the fine range component 406 can identify a fine range bin (e.g., fine range bin 512) in the fine-range-Doppler map 508 that is expected to be representative of a target. The fine range component 406 can identify the fine range bin as being expected to be representative of a target based upon a radar return response in the fine range bin 512, as indicated by the fine-range-Doppler map 508. Responsive to identifying the fine range bin 512, the fine range component 406 outputs an indication that a target is located at a fine range corresponding to the fine range bin, wherein the fine range has a finer resolution than the coarse range estimated by the coarse range component 404. In an exemplary embodiment, the coarse range bin 506 on which the fine-range-Doppler map 508 is based can indicate that a target is present at a range of 20 and 21 meters, and the fine-range bin 512 can be representative of ranges between about 20.33 meters and about 20.5 meters. Responsive to identifying that the fine-range bin 512 is expected to be representative of a target, the fine range component 406 outputs an indication that a target is located at a range of 20.415 meters (a center range of the fine range bin 512).

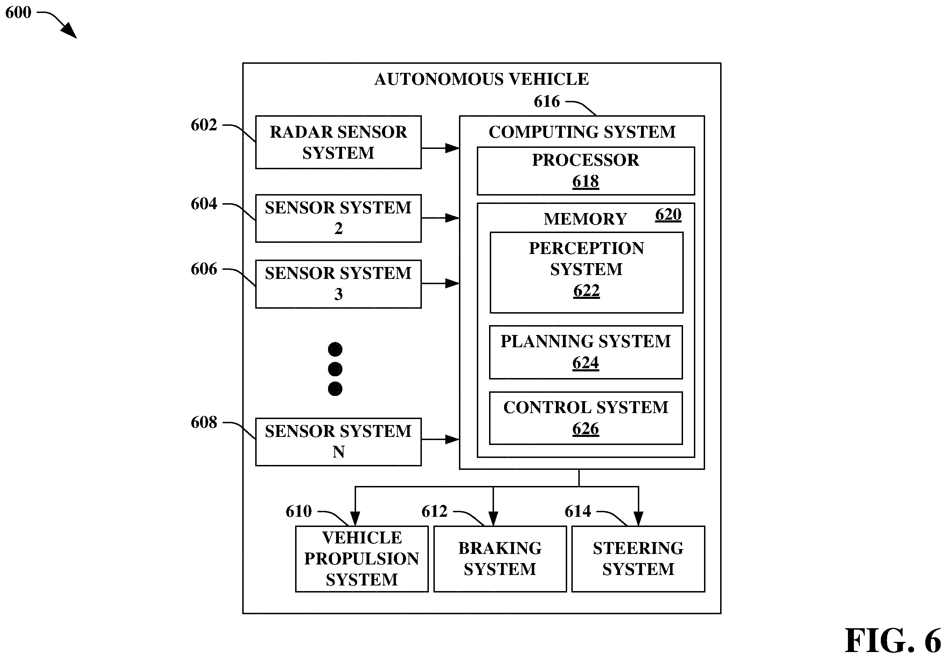

Various technologies described herein are suitable for use in connection with an autonomous vehicle (AV) that employs a radar system to facilitate navigation about roadways. Referring now to Fig. 6, an exemplary AV 600 is illustrated, wherein the AV 600 can navigate about roadways without human conduction based upon sensor signals output by sensor systems of the AV 600. The AV 600 includes a plurality of sensor systems 602-608 (a first sensor system 602 through an Nth sensor system 608). The sensor systems 602-608 may be of different types. For example, the first sensor system 602 is a radar sensor system, the second sensor system 604 may be a lidar sensor system, the third sensor system 606 may be a camera (image) system, and the Nth sensor system 608 may be a sonar system. Other exemplary sensor systems include GPS sensor systems, inertial sensor systems, infrared sensor systems, and the like. The various sensor systems 602-608 are arranged about the AV 600. The sensor systems 602-608 are configured to repeatedly (e.g. continuously, or periodically) output sensor data that is representative of objects and conditions in the driving environment of the AV 600.

The AV 600 further includes several mechanical systems that are used to effectuate appropriate motion of the AV 600. For instance, the mechanical systems can include but are not limited to, a vehicle propulsion system 610, a braking system 612, and a steering system 614. The vehicle propulsion system 610 may be an electric engine, an internal combustion engine, or a combination thereof. The braking system 612 can include an engine brake, brake pads, actuators, a regenerative braking system, and/or any other suitable componentry that is configured to assist in decelerating the AV 600. The steering system 614 includes suitable componentry that is configured to control the direction of movement of the AV 600.

The AV 600 additionally comprises a computing system 616 that is in communication with the sensor systems 602-608 and is further in communication with the vehicle propulsion system 610, the braking system 612, and the steering system 614. The computing system 616 includes a processor 618 and memory 620 that includes computer-executable instructions that are executed by the processor 618. In an example, the processor 618 can be or include a graphics processing unit (GPU), a plurality of GPUs, a central processing unit (CPU), a plurality of CPUs, an application-specific integrated circuit (ASIC), a microcontroller, a programmable logic controller (PLC), a field programmable gate array (FPGA), or the like.

The memory 620 comprises a perception system 622, a planning system 624, and a control system 626. Briefly, the perception system 622 is configured to identify the presence of objects and/or characteristics of objects in the driving environment of the AV 600 based upon sensor data output by the sensor systems 602-608. The planning system 624 is configured to plan a route and/or a maneuver of the AV 600 based upon data pertaining to objects in the driving environment that are output by the perception system 622. The control system 626 is configured to control the mechanical systems 610-614 of the AV 600 to effectuate appropriate motion to cause the AV 600 to execute a maneuver planned by the planning system 624.

The perception system 622 is configured to identify objects in proximity to the AV 600 that are captured in sensor signals output by the sensor systems 602-608. By way of example, the perception system 622 can be configured to identify the presence of an object in the driving environment of the AV 600 based upon images generated by a camera system included in the sensor systems 604-608. In another example, the perception system 622 can be configured to determine a presence and position of an object based upon radar data output by the radar sensor system 602. In exemplary embodiments, the radar sensor system 602 can be or include the radar sensor 100. In such embodiments, the perception system 622 can be configured to identify a position of an object in the driving environment of the AV 600 based upon an estimated range output by the radar sensor 100 (e.g., an estimated coarse range and/or an estimated fine range).

The AV 600 can be included in a fleet of AVs that are in communication with a common server computing system. In these embodiments, the server computing system can control the fleet of AVs such that radar sensor systems of AVs operating in a same driving environment (e.g., within line of sight of one another, or within a threshold distance of one another) employ different pulse sequence carrier frequencies. In an exemplary embodiment, a radar sensor system of a first AV can be controlled so as not to transmit pulse sequences having same center frequencies as pulse sequences transmitted by a radar sensor system of a second AV at the same time. In further embodiments, the radar sensor system of the first AV can be controlled to transmit pulse sequences in a different order than a radar sensor system of a second AV. For instance, the radar sensor system of the first AV can be configured to transmit a set of pulse sequences at four different center frequencies A, B, C, and D in an order A, B, C, D. The radar sensor system of the second AV can be configured to transmit pulse sequences using a same set of center frequencies in a frequency order B, A, D, C. Such configurations can mitigate the effects of interference when multiple AVs that employ radar sensor systems are operating in a same driving environment. In some embodiments, the radar sensor systems of AVs in a fleet of AVs can be configured to transmit pulse sequences in PRIs that have respective random orders of pulse sequence carrier frequencies.

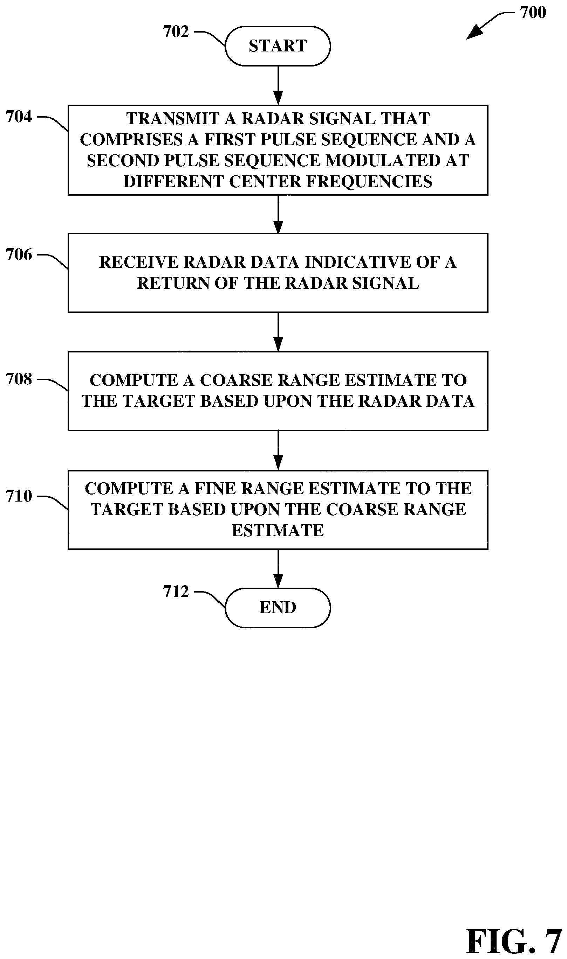

Fig. 7 illustrates an exemplary methodology relating to radar-based range estimation. While the methodology is shown and described as being a series of acts that are performed in a sequence, it is to be understood and appreciated that the methodology is not limited by the order of the sequence. For example, some acts can occur in a different order than what is described herein. In addition, an act can occur concurrently with another act. Further, in some instances, not all acts may be required to implement a methodology described herein.

Moreover, the acts described herein may be computer-executable instructions that can be implemented by one or more processors and/or stored on a computer-readable medium or media. The computer-executable instructions can include a routine, a sub-routine, programs, a thread of execution, and/or the like. Still further, results of acts of the methodology can be stored in a computer-readable medium, displayed on a display device, and/or the like.

Referring now to Fig. 7, a methodology 700 that facilitates radar range estimation based upon pulse sequences having different center frequencies is illustrated. The methodology 700 begins at 702 and at 704, a radar signal that comprises a first pulse sequence and a second pulse sequence is transmitted. The first pulse sequence and the second pulse sequence are modulated at different center frequencies. In other words, the first pulse sequence has a first center frequency, and the second pulse sequence has a second center frequency that is different from the first center frequency. In various embodiments, the first pulse sequence and the second pulse sequence can have a same bandwidth. At 706, radar data that is indicative of a return of the radar signal is received. The radar return is based upon the radar signal being reflected from a target. At 708, a coarse range estimate to the target is computed based upon the radar data received at 706. The coarse range estimate has a first resolution that is based upon the bandwidth of the first pulse sequence and/or the second pulse sequence. At 710, a fine range estimate to the target is computed, where the fine range estimate is based

**EP 4 246 182 B1**

upon the coarse range estimate and has a finer resolution than the coarse range estimate. In exemplary embodiments, the fine range estimate can be computed based upon a fine-range-Doppler map that is computed according to Eqs. 6-12 above. At 712, the methodology 700 ends.

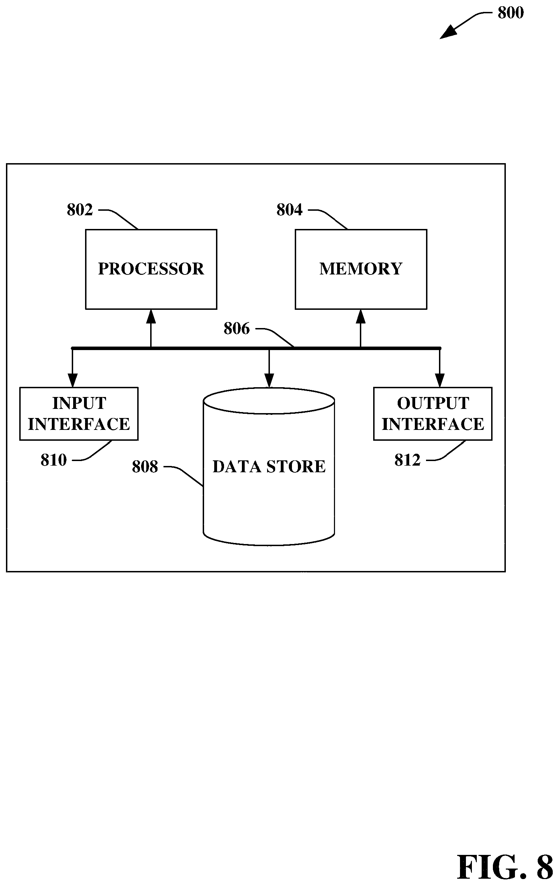

Referring now to Fig. 8, a high-level illustration of an exemplary computing device 800 that can be used in accordance with the systems and methodologies disclosed herein is illustrated. For instance, the computing device 800 may be or include the computing system 616. The computing device 800 includes at least one processor 802 that executes instructions that are stored in a memory 804. The instructions may be, for instance, instructions for implementing functionality described as being carried out by one or more modules, components, or systems discussed above or instructions for implementing one or more of the methods described above. The processor 802 may be a GPU, a plurality of GPUs, a CPU, a plurality of CPUs, a multi-core processor, etc. The processor 802 may access the memory 804 by way of a system bus 806. In addition to storing executable instructions, the memory 804 may also store radar data, beamformed radar data, neural network configurations, etc.

The computing device 800 additionally includes a data store 808 that is accessible by the processor 802 by way of the system bus 806. The data store 808 may include executable instructions, radar data, beamformed radar data, embeddings of these data in latent spaces, etc. The computing device 800 also includes an input interface 810 that allows external devices to communicate with the computing device 800. For instance, the input interface 810 may be used to receive instructions from an external computing device, etc. The computing device 800 also includes an output interface 812 that interfaces the computing device 800 with one or more external devices. For example, the computing device 800 may transmit control signals to the vehicle propulsion system 610, the braking system 612, and/or the steering system 614 by way of the output interface 812.

Additionally, while illustrated as a single system, it is to be understood that the computing device 800 may be a distributed system. Thus, for instance, several devices may be in communication by way of a network connection and may collectively perform tasks described as being performed by the computing device 800.

Various functions described herein can be implemented in hardware, software, or any combination thereof. If implemented in software, the functions can be stored on or transmitted over as one or more instructions or code on a computer-readable medium. Computer-readable media includes computer-readable storage media. A computer-readable storage media can be any available storage media that can be accessed by a computer. By way of example, and not limitation, such computer-readable storage media can comprise RAM, ROM, EEPROM, CD-ROM or other optical disk storage, magnetic disk storage or other magnetic storage devices, or any other medium that can be used to store desired program code in the form of instructions or data structures and that can be accessed by a computer. Disk and disc, as used herein, include compact disc (CD), laser disc, optical disc, digital versatile disc (DVD), floppy disk, and Blu-ray disc (BD), where disks usually reproduce data magnetically and discs usually reproduce data optically with lasers. Further, a propagated signal is not included within the scope of computer-readable storage media. Computer-readable media also includes communication media including any medium that facilitates transfer of a computer program from one place to another. A connection, for instance, can be a communication medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio and microwave are included in the definition of communication medium. Combinations of the above should also be included within the scope of computer-readable media.

Alternatively, or in addition, the functionally described herein can be performed, at least in part, by one or more hardware logic components. For example, and without limitation, illustrative types of hardware logic components that can be used include FPGAs, ASICs, Application-specific Standard Products (ASSPs), SOCs, Complex Programmable Logic Devices (CPLDs), etc.

## Claims

1. A radar system, comprising:

   a transmitting antenna;
   a receiving antenna; and
   a hardware logic component (106) configured to perform acts comprising:

   causing the transmitting antenna to transmit a digitally modulated radar signal that comprises a first pulse sequence (302) in a first frequency band, and a second pulse sequence (304) in a second frequency band, wherein the first frequency band and the second frequency band are different, and wherein each pulse sequence is modulated at a different center frequency;
   receiving radar data that is indicative of a radar return received at the receiving antenna, wherein the radar return is based upon the radar signal being reflected from a target, and the radar data includes a first portion that is representative of a reflection of the first pulse sequence (302) from the target and a second portion that is representative of a reflection of the second pulse sequence (304) from the target;

prior to computing a coarse range estimate, applying a first matched filter to the first portion of the radar data, the first matched filter based upon the first pulse sequence (302);

prior to computing the coarse range estimate, applying a second matched filter to the second portion of the radar data, the second matched filter based upon the second pulse sequence (304);

computing the coarse range estimate to the target based upon the radar data, the coarse range estimate having a first resolution that is based upon bandwidths of the first pulse sequence (302) and the second pulse sequence (304); and

computing a fine range estimate to the target based upon the coarse range estimate, the fine range estimate having a second resolution that is based upon a bandwidth that is greater than bandwidths of the first pulse sequence (302) and the second pulse sequence (304), the second resolution being finer than the first resolution, wherein

a third frequency band upon which the second resolution is based includes the first frequency band and the second frequency band.

2. The radar system of claim 1, wherein computing the coarse range estimate comprises computing a digital correlation over frequency components of the radar return represented by the radar data, the digital correlation being an Inverse Fast Fourier Transfer , IFFT.

3. The radar system of claim 1, wherein computing the coarse range estimate comprises computing a coarse range map (504) based upon the radar data, the coarse range map (504) including a coarse range bin (506), wherein the coarse range map (504) indicates that the target is present at a range associated with the coarse range bin (506).

4. The radar system of claim 3, wherein computing the fine range estimate comprises computing a fine-range-Doppler map (508) based upon the coarse range bin (506), the fine-range-Doppler map (508) including a fine range bin (512), wherein the fine-range-Doppler map (508) indicates that the target is present at a range associated with the fine range bin (512).

5. The radar system of claim 4, wherein the coarse range bin (506) comprises a vector of values indicative of a radar return response in the coarse range bin (506) over time, wherein computing the fine-range-Doppler map (508) comprises performing element-wise multiplication of the vector by a coarse range migration factor to generate a second vector, wherein computing the fine range estimate is based upon the second vector.

6. The radar system of claim 5, wherein computing the fine-range-Doppler map (508) comprises:

constructing a first matrix based upon the second vector; and
performing element-wise multiplication of the first matrix by a second matrix to generate a third matrix, the second matrix including values based upon the center frequencies of the first pulse sequence (302) and the second pulse sequence (304).

7. The radar system of claim 6, wherein computing the fine-range-Doppler map (508) further comprises performing element-wise multiplication of the third matrix by a fourth matrix, the fourth matrix being based upon a period of one of the first pulse sequence (302) or the second pulse sequence (304).

8. The radar system of claim 1, wherein the resolution of the fine range estimate is less than or equal to 7.5 centimeters, and wherein bandwidths of the first pulse sequence (302) and the second pulse sequence (304) are less than 2 GHz.

9. The radar system of claim 1, further comprising an analog-to-digital converter, ADC (114), the ADC (114) configured to receive an electrical signal output by the receiving antenna and to output the radar data based upon the electrical signal, wherein the resolution of the fine range estimate is less than or equal to 15 centimeters, and wherein an effective sampling rate of the ADC (114) is less than or equal to 500 megasamples per second (MS/s).

10. The radar system of claim 9, wherein the first pulse sequence (302) and the second pulse sequence (304) have bandwidths less than or equal to 500 MHz.

11. The radar system of claim 1, the digitally modulated radar signal comprising a third pulse sequence (306), wherein the first pulse sequence (302), the second pulse sequence (304), and the third pulse sequence (306) are transmitted in random order of center frequency.

12. The radar system of claim 1, wherein the radar system is configured for phase-modulated continuous wave, PMCW, operation.

13. A method, comprising:

transmitting a digitally modulated radar signal that comprises a first pulse sequence (302) in a first frequency band, and a second pulse sequence (304) in a second frequency band, wherein the first frequency band and the second frequency band are different, and wherein each pulse sequence is modulated at a different center frequency;
receiving radar data that is indicative of a radar return, wherein
the radar return is based upon the radar signal being reflected from a target, and
the radar data includes a first portion that is representative of a reflection of the first pulse sequence (302) from the target and a second portion that is representative of a reflection of the second pulse sequence (304) from the target;
prior to computing a coarse range estimate, applying a first matched filter to the first portion of the radar data, the first matched filter based upon the first pulse sequence (302);
prior to computing the coarse range estimate, applying a second matched filter to the second portion of the radar data, the second matched filter based upon the second pulse sequence (304);
computing the coarse range estimate to the target based upon the radar data, the coarse range estimate having a first resolution that is based upon bandwidths of the first pulse sequence (302) and the second pulse sequence (304); and
computing a fine range estimate to the target based upon the coarse range estimate, the fine range estimate having a second resolution that is based upon a bandwidth that is greater than bandwidths of the first pulse sequence (302) and the second pulse sequence (304), the second resolution being finer than the first resolution, wherein a third frequency band upon which the second resolution is based includes the first frequency band and the second frequency band.

14. The method of claim 13, wherein the second resolution is finer than 15 centimeters, and wherein bandwidths of the first pulse sequence (302) and the second pulse sequence (304) are less than 1 GHz.

**Patentansprüche**

1. Radarsystem, umfassend:

eine Sendeantenne,
eine Empfangsantenne; und
eine Hardware-Logikkomponente (106), die konfiguriert ist, um Handlungen durchzuführen, die umfassen:

Bewirken, dass die Sendeantenne ein digital moduliertes Radarsignal sendet, das eine erste Impulsfolge (302) in einem ersten Frequenzband und eine zweite Impulsfolge (304) in einem zweiten Frequenzband umfasst, wobei das erste Frequenzband und das zweite Frequenzband unterschiedlich sind, und wobei jede Impulsfolge mit einer unterschiedlichen Mittenfrequenz moduliert ist;
Empfangen von Radardaten, die ein Radarecho anzeigen, das an der Empfangsantenne empfangen wird, wobei das Radarecho darauf basiert, dass das Radarsignal von einem Ziel reflektiert wird, und die Radardaten einen ersten Abschnitt, der für eine Reflexion der ersten Impulsfolge (302) von dem Ziel repräsentativ ist, und einen zweiten Abschnitt, der für eine Reflexion der zweiten Impulsfolge (304) von dem Ziel repräsentativ ist, umfassen;
vor dem Berechnen einer groben Entfernungsschätzung, Anwenden eines ersten angepassten Filters auf den ersten Abschnitt der Radardaten, wobei das erste angepasste Filter auf der ersten Impulsfolge (302) basiert;
vor dem Berechnen der groben Entfernungsschätzung, Anwenden eines zweiten angepassten Filters auf den zweiten Abschnitt der Radardaten, wobei das zweite angepasste Filter auf der zweiten Impulsfolge (304) basiert;

Berechnen der groben Entfernungsschätzung zu dem Ziel basierend auf den Radardaten, wobei die grobe Entfernungsschätzung eine erste Auflösung hat, die auf Bandbreiten der ersten Impulsfolge (302) und der zweiten Impulsfolge (304) basiert; und

Berechnen einer feinen Entfernungsschätzung zu dem Ziel basierend auf der groben Entfernungsschätzung, wobei die feine Entfernungsschätzung eine zweite Auflösung hat, die auf einer Bandbreite basiert, die größer als Bandbreiten der ersten Impulsfolge (302) und der zweiten Impulsfolge (304) ist, wobei die zweite Auflösung feiner als die erste Auflösung ist, wobei ein drittes Frequenzband, auf dem die zweite Auflösung basiert, das erste Frequenzband und das zweite Frequenzband umfasst.

2. Radarsystem nach Anspruch 1, wobei das Berechnen der groben Entfernungsschätzung das Berechnen einer digitalen Korrelation über Frequenzkomponenten des Radarechos umfasst, die durch die Radardaten dargestellt werden, wobei die digitale Korrelation ein inverse schnelle FourierTransformation, IFFT, ist.

3. Radarsystem nach Anspruch 1, wobei das Berechnen der groben Entfernungsschätzung das Berechnen einer Grobentfernungskarte (504) basierend auf den Radardaten umfasst, wobei die Grobentfernungskarte (504) ein Grobentfernungs-Bin (506) umfasst, wobei die Grobentfernungskarte (504) anzeigt, dass das Ziel in einer Entfernung vorhanden ist, die dem Grobentfernungs-Bin (506) zugeordnet ist.

4. Radarsystem nach Anspruch 3, wobei das Berechnen der feinen Entfernungsschätzung das Berechnen einer Feinentfernungs-Doppler-Karte (508) basierend auf dem Grobentfernungs-Bin (506) umfasst, wobei die Feinentfernungs-Doppler-Karte (508) ein Feinentfernungs-Bin (512) umfasst, wobei die Feinentfernungs-Doppler-Karte (508) anzeigt, dass das Ziel in einer Entfernung vorhanden ist, die dem Feinentfernungs-Bin (512) zugeordnet ist.

5. Radarsystem nach Anspruch 4, wobei das Grobentfernungs-Bin (506) einen Vektor von Werten umfasst, die eine Radarechoantwort in dem Grobentfernungs-Bin (506) über die Zeit anzeigen, wobei das Berechnen der Feinentfernungs-Doppler-Karte (508) das Durchführen einer elementweisen Multiplikation des Vektors mit einem Grobentfernungsmigrationsfaktor umfasst, um einen zweiten Vektor zu erzeugen, wobei das Berechnen der feinen Entfernungsschätzung auf dem zweiten Vektor basiert.

6. Radarsystem nach Anspruch 5, wobei das Berechnen der Feinentfernungs-Doppler-Karte (508) umfasst:

Konstruieren einer ersten Matrix basierend auf dem zweiten Vektor; und
Durchführen einer elementweisen Multiplikation der ersten Matrix mit einer zweiten Matrix, um eine dritte Matrix zu erzeugen, wobei die zweite Matrix Werte umfasst, die auf den Mittenfrequenzen der ersten Impulsfolge (302) und der zweiten Impulsfolge (304) basieren.

7. Radarsystem nach Anspruch 6, wobei das Berechnen der Feinentfernungs-Doppler-Karte (508) ferner das Durchführen einer elementweisen Multiplikation der dritten Matrix mit einer vierten Matrix umfasst, wobei die vierte Matrix auf einer Periode von einer der ersten Impulsfolge (302) oder der zweiten Impulsfolge (304) basiert.

8. Radarsystem nach Anspruch 1, wobei die Auflösung der feinen Entfernungsschätzung kleiner als oder gleich 7,5 Zentimeter ist und wobei Bandbreiten der ersten Impulsfolge (302) und der zweiten Impulsfolge (304) kleiner als 2 GHz sind.

9. Radarsystem nach Anspruch 1, ferner umfassend einen Analog-DigitalWandler, ADC (114), wobei der ADC (114) konfiguriert ist, um ein elektrisches Signal zu empfangen, das von der Empfangsantenne ausgegeben wird, und um die Radardaten basierend auf dem elektrischen Signal auszugeben, wobei die Auflösung der feinen Entfernungsschätzung kleiner als oder gleich 15 Zentimeter ist und wobei eine effektive Abtastrate des ADC (114) kleiner als oder gleich 500 Megasamples pro Sekunde (MS/s) ist.

10. Radarsystem nach Anspruch 9, wobei die erste Impulsfolge (302) und die zweite Impulsfolge (304) Bandbreiten kleiner als oder gleich 500 MHz haben.

11. Radarsystem nach Anspruch 1, wobei das digital modulierte Radarsignal eine dritte Impulsfolge (306) umfasst, wobei die erste Impulsfolge (302), die zweite Impulsfolge (304) und die dritte Impulsfolge (306) in zufälliger Reihenfolge der Mittenfrequenz gesendet werden.

12. Radarsystem nach Anspruch 1, wobei das Radarsystem für phasenmodulierten Dauerstrichbetrieb, PMCW-Betrieb, konfiguriert ist.

**13.** Verfahren, umfassend:

Senden eines digital modulierten Radarsignals, das eine erste Impulsfolge (302) in einem ersten Frequenzband und eine zweite Impulsfolge (304) in einem zweiten Frequenzband umfasst, wobei das erste Frequenzband und das zweite Frequenzband unterschiedlich sind, und wobei jede Impulsfolge mit einer unterschiedlichen Mittenfrequenz moduliert ist;

Empfangen von Radardaten, die ein Radarecho anzeigen, wobei das Radarecho darauf basiert, dass das Radarsignal von einem Ziel reflektiert wird, und die Radardaten einen ersten Abschnitt, der für eine Reflexion der ersten Impulsfolge (302) von dem Ziel repräsentativ ist, und einen zweiten Abschnitt, der für eine Reflexion der zweiten Impulsfolge (304) von dem Ziel repräsentativ ist, umfassen;

vor dem Berechnen einer groben Entfernungsschätzung, Anwenden eines ersten angepassten Filters auf den ersten Abschnitt der Radardaten, wobei das erste angepasste Filter auf der ersten Impulsfolge (302) basiert;

vor dem Berechnen der groben Entfernungsschätzung, Anwenden eines zweiten angepassten Filters auf den zweiten Abschnitt der Radardaten, wobei das zweite angepasste Filter auf der zweiten Impulsfolge (304) basiert;

Berechnen der groben Entfernungsschätzung zu dem Ziel basierend auf den Radardaten, wobei die grobe Entfernungsschätzung eine erste Auflösung hat, die auf Bandbreiten der ersten Impulsfolge (302) und der zweiten Impulsfolge (304) basiert; und

Berechnen einer feinen Entfernungsschätzung zu dem Ziel basierend auf der groben Entfernungsschätzung, wobei die feine Entfernungsschätzung eine zweite Auflösung hat, die auf einer Bandbreite basiert, die größer als Bandbreiten der ersten Impulsfolge (302) und der zweiten Impulsfolge (304) ist, wobei die zweite Auflösung feiner als die erste Auflösung ist, wobei ein drittes Frequenzband, auf dem die zweite Auflösung basiert, das erste Frequenzband und das zweite Frequenzband umfasst.

**14.** Verfahren nach Anspruch 13, wobei die zweite Auflösung feiner als 15 Zentimeter ist und wobei Bandbreiten der ersten Impulsfolge (302) und der zweiten Impulsfolge (304) kleiner als 1 GHz sind.

**Revendications**

**1.** Système radar, comprenant :

une antenne d'émission ;
une antenne de réception ; et
un composant logique matériel (106) configuré pour effectuer les opérations consistant à :

amener l'antenne d'émission à émettre un signal radar modulé numériquement qui comprend une première séquence d'impulsions (302) dans une première bande de fréquences, et une deuxième séquence d'impulsions (304) dans une deuxième bande de fréquences, la première bande de fréquences et la deuxième bande de fréquences étant différentes, et chaque séquence d'impulsions étant modulée à une fréquence centrale différente ;

recevoir des données radar qui indiquent un retour radar reçu au niveau de l'antenne de réception, le retour radar étant basé sur le signal radar qui est réfléchi depuis une cible, et les données radar incluant une première portion qui représente une réflexion de la première séquence d'impulsions (302) depuis la cible et une seconde portion qui représente une réflexion de la deuxième séquence d'impulsions (304) depuis la cible ;

avant de calculer une estimation de distance grossière, appliquer un premier filtre adapté sur la première portion des données radar, le premier filtre adapté étant basé sur la première séquence d'impulsions (302) ;

avant de calculer l'estimation de distance grossière, appliquer un second filtre adapté sur la seconde portion des données radar, le second filtre adapté étant basé sur la deuxième séquence d'impulsions (304) ;

calculer l'estimation de distance grossière jusqu'à la cible sur la base des données radar, l'estimation de distance grossière ayant une première résolution qui est basée sur des largeurs de bande de la première séquence d'impulsions (302) et de la deuxième séquence d'impulsions (304) ; et

calculer une estimation de distance fine jusqu'à la cible sur la base de l'estimation de distance grossière, l'estimation de distance fine ayant une seconde résolution qui est basée sur une largeur de bande qui est supérieure à des largeurs de bande de la première séquence d'impulsions (302) et de la deuxième séquence d'impulsions (304), la seconde résolution étant plus fine que la première résolution, une troisième bande de fréquences sur laquelle est basée la seconde résolution incluant la première bande de fréquences et la deuxième bande de fréquences.

2. Système radar selon la revendication 1, dans lequel l'opération consistant à calculer l'estimation de distance grossière comprend de calculer une corrélation numérique sur des composantes de fréquences du retour radar représenté par les données radar, la corrélation numérique étant une transformée de Fourier rapide inverse, IFFT (Inverse Fast Fourier Transfer).

3. Système radar selon la revendication 1, dans lequel l'opération consistant à calculer l'estimation de distance grossière comprend de calculer une carte distance grossière (504) sur la base des données radar, la carte distance grossière (504) incluant un créneau de distance grossière (506), dans lequel la carte distance grossière (504) indique que la cible est présente au niveau d'une plage associée au créneau de distance grossière (506).

4. Système radar selon la revendication 3, dans lequel l'opération consistant à calculer l'estimation de distance fine comprend de calculer une carte distance-Doppler fine (508) sur la base du créneau de distance grossière (506), la carte distance-Doppler fine (508) incluant un créneau de distance fine (512), dans lequel la carte distance-Doppler fine (508) indique que la cible est présente à une distance associée au créneau de distance fine (512).

5. Système radar selon la revendication 4, dans lequel le créneau de distance grossière (506) comprend un vecteur de valeurs indiquant une réponse de retour radar dans le créneau de distance grossière (506) dans le temps, dans lequel l'opération consistant à calculer la carte distance-Doppler fine (508) comprend d'effectuer une multiplication élément par élément du vecteur par un facteur de migration de distance grossière pour générer un second vecteur, l'opération consistant à calculer l'estimation de distance fine étant basée sur le second vecteur.

6. Système radar selon la revendication 5, dans lequel l'opération consistant à calculer la carte distance-Doppler fine (508) comprend de :

concevoir une première matrice sur la base du second vecteur ; et
effectuer une multiplication élément par élément de la première matrice par une deuxième matrice pour générer une troisième matrice, la deuxième matrice incluant des valeurs basées sur les fréquences centrales de la première séquence d'impulsions (302) et de la deuxième séquence d'impulsions (304).

7. Système radar selon la revendication 6, dans lequel l'opération consistant à calculer la carte distance-Doppler fine (508) comprend en outre d'effectuer une multiplication élément par élément de la troisième matrice par une quatrième matrice, la quatrième matrice étant basée sur une période de l'une de la première séquence d'impulsions (302) ou de la deuxième séquence d'impulsions (304).

8. Système radar selon la revendication 1, dans lequel la résolution de l'estimation de distance fine est inférieure ou égale à 7,5 cm, et dans lequel des largeurs de bande de la première séquence d'impulsions (302) et de la deuxième séquence d'impulsions (304) sont inférieures à 2 GHz.

9. Système radar selon la revendication 1, comprenant en outre un convertisseur analogique/numérique, ADC (analog-to-digital converter) (114), l'ADC (114) étant configuré pour recevoir un signal électrique sorti par l'antenne de réception et pour sortir les données radar sur la base du signal électrique, dans lequel la résolution de l'estimation de distance fine est inférieure ou égale à 15 centimètres, et dans lequel un taux d'échantillonnage effectif de l'ADC (114) est inférieur ou égal à 500 mégaéchantillons par seconde (MS/s).

10. Système radar selon la revendication 9, dans lequel la première séquence d'impulsions (302) et la deuxième séquence d'impulsions (304) ont des largeurs de bande inférieures ou égales à 500 MHz.

11. Système radar selon la revendication 1, le signal radar modulé numériquement comprenant une troisième séquence d'impulsions (306), dans lequel la première séquence d'impulsions (302), la deuxième séquence d'impulsions (304), et la troisième séquence d'impulsions (306) sont émises dans un ordre aléatoire d'une fréquence centrale.

12. Système radar selon la revendication 1, dans lequel le système radar est configuré pour un fonctionnement à onde continue à modulation de phase, PMCW (phase-modulated continuous wave).

13. Procédé comprenant les étapes consistant à :

émettre un signal radar modulé numériquement qui comprend une première séquence d'impulsions (302) dans une première bande de fréquences, et une deuxième séquence d'impulsions (304) dans une deuxième bande de fréquences, la première bande de fréquences et la deuxième bande de fréquences étant différentes, et chaque séquence d'impulsions étant modulée à une fréquence centrale différente ;

recevoir des données radar qui indiquent un retour radar, le retour radar étant basé sur le signal radar qui est réfléchi depuis une cible, et les données radar incluant une première portion qui représente une réflexion de la première séquence d'impulsions (302) depuis la cible, et une seconde portion qui représente une réflexion de la deuxième séquence d'impulsions (304) depuis la cible ;

avant de calculer une estimation de distance grossière, appliquer un premier filtre adapté sur la première portion des données radar, le premier filtre adapté étant basé sur la première séquence d'impulsions (302) ;

avant de calculer l'estimation de distance grossière, appliquer un second filtre adapté sur la seconde portion des données radar, le second filtre adapté étant basé sur la deuxième séquence d'impulsions (304) ;

calculer l'estimation de distance grossière jusqu'à la cible sur la base des données radar, l'estimation de distance grossière ayant une première résolution qui est basée sur des largeurs de bande de la première séquence d'impulsions (302) et de la deuxième séquence d'impulsions (304) ; et

calculer une estimation de distance fine jusqu'à la cible sur la base de l'estimation de distance grossière, l'estimation de distance fine ayant une seconde résolution qui est basée sur une largeur de bande qui est supérieure à des largeurs de bande de la première séquence d'impulsions (302) et de la deuxième séquence d'impulsions (304), la seconde résolution étant plus fine que la première résolution, une troisième bande de fréquences sur laquelle est basée la seconde résolution incluant la première bande de fréquences et la deuxième bande de fréquences.

14. Procédé selon la revendication 13, dans lequel la seconde résolution est plus fine que 15 centimètres, et dans lequel des largeurs de bande de la première séquence d'impulsions (302) et de la deuxième séquence d'impulsions (304) sont inférieures à 1 GHz.

FIG. 1

**FIG. 2**

FIG. 3

EP 4 246 182 B1

106 ⟍

HARDWARE LOGIC
COMPONENT

SIGNAL
GENERATOR
COMPONENT

⟋ 110

RADAR ANALYSIS
COMPONENT

FILTER
COMPONENT
402

COARSE RANGE
COMPONENT
404

⟋ 116

FINE RANGE
COMPONENT
406

**FIG. 4**

FIG. 5

EP 4 246 182 B1

FIG. 6

702 — START

704 — TRANSMIT A RADAR SIGNAL THAT COMPRISES A FIRST PULSE SEQUENCE AND A SECOND PULSE SEQUENCE MODULATED AT DIFFERENT CENTER FREQUENCIES

706 — RECEIVE RADAR DATA INDICATIVE OF A RETURN OF THE RADAR SIGNAL

708 — COMPUTE A COARSE RANGE ESTIMATE TO THE TARGET BASED UPON THE RADAR DATA

710 — COMPUTE A FINE RANGE ESTIMATE TO THE TARGET BASED UPON THE COARSE RANGE ESTIMATE

712 — END

700

**FIG. 7**

800

802

**PROCESSOR**

804

**MEMORY**

806

**INPUT INTERFACE**

810

808

**DATA STORE**

**OUTPUT INTERFACE**

812

**FIG. 8**

**EP 4 246 182 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019215734 A1

- EP 529704 A1